# EUROPÄISCHE PATENTSCHRIFT

(11) **EP 0 898 783 B1**
(45) Veröffentlichungstag und Bekanntmachung des Hinweises auf die Patenterteilung: **20.03.2002**
(21) Anmeldenummer: 97954944.1
(22) Anmeldetag: 22.12.1997
(51) Int. Cl.: H01J 37/00, G02B 21/00

(54) **RASTERMIKROSKOP, BEI DEM EINE PROBE IN MEHREREN PROBENPUNKTEN GLEICHZEITIG OPTISCH ANGEREGT WIRD**
SCANNING MICROSCOPE IN WHICH A SAMPLE IS SIMULTANEOUSLY AND OPTICALLY EXCITED AT VARIOUS POINTS
MICROSCOPE A BALAYAGE DANS LEQUEL UN ECHANTILLON EST EXCITE OPTIQUEMENT SIMULTANEMENT EN PLUSIEURS POINTS

(30) Priorität: 22.12.1996 DE 19653413
(43) Veröffentlichungstag der Anmeldung: 03.03.1999
(73) Patentinhaber: Max-Planck-Gesellschaft zur Förderung der Wissenschaften e.V., 80539 München (DE)
(72) Erfinder: HELL,Stefan, 69117 Heidelberg (DE); PICK,Rainer, 37075 Göttingen (DE); BEWERSDORF,Jörg, 73430 Aalen (DE)
(74) Vertreter: Hüppe, Paul Wilhelm, Dipl.-Phys.
(86) Internationale Anmeldenummer: EP9707250
(87) Internationale Veröffentlichungsnummer: WO9828775

(56) Entgegenhaltungen:
- DE-A- 4 040 441
- US-A- 5 034 613

## Beschreibung

Die Erfindung bezieht sich auf eine optische Vorrichtung, insbesondere ein Rastermikroskop, wobei ein aufgeweiteter Laserstrahl durch mehrere nebeneinander angeordnete Mikrolinsen in mehrere Teilstrahlen aufgespalten wird, wobei die Teilstrahlen mit einem gemeinsamen Objektiv jeweils in einem Fokuspunkt zur optischen Anregung einer Probe fokussiert werden und wobei mit einem von der Probe aus hinter dem Objektiv angeordneten Photosensor aus den einzelnen Fokuspunkten von der Probe stammendes Fluoreszenzlicht registriert wird.

Typischerweise ist bei einer solchen optischen Vorrichtung zwischen der Lichtquelle für den Laserstrahl und der Probe eine Verzweigung des Strahlengangs beispielsweise durch einen Strahlteiler vorgesehen, so daß das von der Probe stammende Fluoreszenzlicht seitlich aus der Richtung des anregenden Laserstrahls zu dem Photosensor ausgelenkt wird.

Ein Rastermikroskop, bei dem aus einem aufgeweiteten Laserstrahl mehrere Teilstrahlen ausgebildet werden, bei dem die Teilstrahlen mit einem gemeinsamen Objektiv jeweils in einem Fokuspunkt zur optischen Anregung einer Probe fokussiert werden und bei dem mit einem von der Probe aus hinter dem Objektiv angeordneten Photosensor aus den einzelnen Fokuspunkten von der Probe stammendes Fluoreszenzlicht registriert wird, ist aus der US-Z Nature, Vol. 383, Seite 760 bekannt. Hier werden aus dem einfallenden Laserstrahl mehrere Teilstrahlen mit Hilfe einer eine Mehrzahl von Löchern aufweisenden Lochblende ausgebildet. Die Lochblende ist derart im Strahlengang der Vorrichtung angeordnet, daß auch das Fluoreszenzlicht von der Probe durch die Lochblende hindurchtreten muß, wenn es auf den Photosensor gelangen soll Es handelt sich somit um ein konfokales Rastermikroskop, bei dem annähernd nur Fluoreszenzlicht aus einer Ebene der Probe zu dem Photosensor gelangen kann. Dies ermöglicht eine dreidimensionale Auflösung der Probe bezüglich der gewonnenen Fluoreszenzlichtintensitäten. Bei der Lochblende des bekannten Rastermikrokops handelt es sich um eine sogenannte Nipkow-Scheibe, in der die einzelnen Löcher so angeordnet sind, daß sie beim Verdrehen der Nipkow-Scheibe um ihren Mittelpunkt die Probe gleichmäßig abrastern. Die Nipkow-Scheibe wurde ursprünglich zum Abrastern von Bildern zur Gewinnung eines telegraphierfähigen Signals entwickelt.

Ein Problem des bekannten Rasterlasermikroskops ist es, daß die Löcher der Lochblende einen gewissen Mindestabstand in seitlicher Richtung aufweisen müssen, damit Fluoreszenzlicht, das aus anderen Ebenen als der zu betrachtenden Ebene der Probe stammt und das nicht zurück auf das Ausgangsloch der Anregenden Strahlung fokussiert wird, nicht durch dem Ausgangsloch benachbarte Löcher zu dem Photosensor gelangt. Ein großer Abstand der Löcher in der Lochblende bedeutet jedoch, daß die Lichtleistung des einfallenden Laserstrahls durch die Lochblende im wesentlichen ausgeblendet wird und damit verloren geht. Hinzu kommt, daß das von der Lochblende ausgeblendete Laserlicht von der Rückseite der Lochblende auf den Photosensor reflektiert werden und dort zu einem hohen Untergrund führen kann.

Um diesem Problem zu begegnen, wird in der US-Z Nature, Vol. 338, Seiten 804 bis 806 vorgeschlagen, die Löcher in der Lochblende bewußt besonders dicht anzuordnen und dabei in Kauf zu nehmen, daß bezüglich eines Ausgangslochs nicht fokussiertes Licht durch benachbarte Löcher in der Lochblende zu dem Photosensor gelangt. Der sich durch dieses Licht ergebende Untergrund soll durch Berücksichtigung einer Lichtintensitätsverteilung ausgeglichen werden, die zuvor ohne Verwendung der Lochblende mit dem Photosensor aufgezeichnet wurde und die anschließend von den mit der Lochblende aufgezeichneten Lichtintensitätsverteilungen abgezogen wird. Dieses Vorgehen führt jedoch zu Schwierigkeiten, da der derart abzuziehende Untergrund ohne weiteres eine höhere Größenordnung aufweisen kann, als das interessierende Signal. Damit ergeben sich extreme relative Fehler bei dem korrigierten Signal.

Aus der US-A- 5 034 613 ist ein Rastermikroskop bekannt, bei dem Fluoreszenzlicht von der Probe mit dem Photosensor registriert wird, welches nur die halbe Wellenlänge des einfallenden Laserstrahls aufweist. Die Fluoreszenz der Probe geht dabei auf eine sogenannte zwei-Photonen-Anregung zurück. Die Wahrscheinlichkeit einer solchen zwei-Photonen-Anregung ist nur im Kernbereich des jeweiligen Fokuspunkts, in dem der Laserstrahl zur optischen Anregung der Probe fokussiert wird, merklich von null verschieden. Hierdurch weist dieses bekannte Rastermikroskop eine deutlich verbesserte axiale Auflösung auch gegenüber konfokalen Rastermikroskopen auf. Allerdings sind die Ausbeuten an Fluoreszenzlicht von der Probe relativ geringer als bei einem konfokalen Rastermikroskop. Dies erhöht die Meßzeiten, die je Probenpunkt erforderlich sind, um aussagekräftige Fluoreszenzlicht-Intensitätsdaten zu erhalten. Das Abrastern einer Probe in allen drei Dimensionen nimmt entsprechend einen deutlich längeren Zeitraum in Anspruch als bei einem konfokalen Rastermikroskop, zumal bei dem bekannten Rastermikroskop, welches nach dem Prinzip der zwei-Photonen-Anregung arbeitet, der Laserstrahl jeweils nur in einem Fokuspunkt zur Anregung der Probe fokussiert wird. Die Ausbeute an Fluoreszenzlicht von diesem Fokuspunkt kann zwar durch Erhöhung der Lichtleistung des Laserstrahls gesteigert werden. Hier sind aber enge Grenzen gesetzt, da ansonsten eine lokale Veränderung der Probe durch Überhitzung eintritt.

Aus der DE 40 40 441 A1 ist ein Rastermikroskop bekannt, bei dem ein Laserstrahl aufgespalten wird und die beiden Teile des Laserstrahls aus entgegengesetzten Richtungen in einem gemeinsamen Fokuspunkt zur Anregung einer Probe zur Interferenz gebracht werden. Bei der Interferenz bilden sich im Bereich des gemeinsamen Fokuspunkts der beiden Teilstrahlen ein Hauptmaximum und zwei Nebenmaxima der Lichtintensität aus. Das Hauptmaximum weist eine geringe axiale Erstreckung auf und ist beispielsweise durch eine konfokale Anordnung gut von den Nebenmaxima zu trennen. Die geringe axiale Erstreckung des Hauptmaximums bedeutet eine sehr gute axiale Auflösung dieses bekannten Rastermikroskops.

Ein Rastermikroskop der eingangs beschriebenen Art ist aus Bioimages 4 (2): 57-62, June 1996 bekannt. Hier sind die Mikrolinsen zu einem zu einem Mikrolinsenrad angeordnet, wobei der aufgeweitete Laserstrahl durch jeweils einen Teil der Mikrolinsen in die Teilstrahlen aufgespalten wird und wobei durch Verdrehen des Mikrolinsenrads um seine parallel zu dem Laserstrahl verlaufende Achse die Probe zweidimensional abgescannt wird. Hinter dem Mikrolinsenrad ist ein Blendenrad angeordnet, das für jede Mikrolinse eine Blendenöffnung aufweist. Durch die Blendenöffnung tritt sowohl der entsprechende Teilstrahl in Richtung auf die Probe als auch das von diesem Teilstrahl angeregte Floureszenzlicht in Richtung von der Probe hindurch, um bei dem bekannten Rastermikroskop, das nach mit einer ein-Photonen-Anregung arbeitet, eine ausreichende Tiefenauflösung zu erhalten. Die relativ Anordnung und Lagerung des Mikrolinsenrads und des Blendenrads müssen extrem genau ausgeführt werden, um die einwandfreie Funktion des bekannten Rastermikroskops sicherzustellen. Da die Mikrolinsen bei dem bekannten Mikrolinsenrad nicht zweidimensional nebeneinander sondern wie bei einer herkömmlichen Nipkow-Scheibe in einzelnen gekrümmten Reihen angeordnet sind, wird darüberhinaus nicht die gesamte Lichtintensität des aufgeweiteten Laserstrahls ausgenutzt.

Der Erfindung liegt die Aufgabe zugrunde, eine optische Vorrichtung, das heißt insbesondere ein Rastermikroskop, der eingangs beschriebenen Art derart weiterzuentwickeln, daß eine hohe Lichtleistung eines aufgeweiteten Laserstrahls ohne großen Justieraufwand voll nutzbar gemacht wird.

Erfindungsgemäß wird diese Aufgabe dadurch gelöst, daß bei einer optischen Vorrichtung, d. h. insbesondere bei einem Rastermikroskop, der eingangs beschriebenen Art jedes Photon des von der Probe kommenden und mit dem Photosensor registrierten Fluoreszenzlichts durch mindestens zwei Photonen aus dem Laserstrahl angeregt wird. D.h., die neue Vorrichtung arbeitet mit einer mehr-Photonen-Anregung. Durch die mehr-Photonen-Anregung wird eine ausreichende Tiefenauflösung ohne Verwendung einer den Mikrolinsen nachgeschalteten und dem Photosensor vorgeschalteten Blendenanordnung erreicht.

Die Erfindung ist bei allen Rastermikroskopen anwendbar, die eine mehr-Photonen-Anregung ausnutzt, um die axiale Auflösung zu erhöhen. Das heißt, daß der Laserstrahl auch Laserstrahlung unterschiedlicher Wellenlängen aufweisen kann, wobei die Wellenlängen in einer anderen Beziehung zu der Wellenlänge des von der Probe kommenden Fluoreszenzlichts stehen, als oben angegeben ist. Im Regelfall ist die Wellenlänge des Fluoreszenzlichts aber kürzer als die kürzeste zur Anregung genutzte Wellenlänge des Laserstrahls.

Ein Rastermikroskop gemäß der Erfindung zeichnet sich beispielsweise dadurch aus, daß die Wellenlänge des Laserstrahls etwa doppelt so lang ist wie die Wellenlänge des von der Probe kommenden, mit dem Photosensor registrierten Fluoreszenzlichts. Dies entspricht einer zwei-Photonen-Anregung des Fluoreszenzlichts. Dabei können verschiedene Filter zur Anwendung kommen, die das Fluoreszenzlicht aufgrund seiner unterschiedlichen Wellenlänge vollständig von der anregenden Laserstrahlung trennen.

Die Mikrolinsen können bei der neuen Vorrichtung direkt aneinander angrenzen, so daß der Laserstrahl über seine ganze Weite ausgenutzt wird. Gleichzeitig wird dann kein Laserlicht von den Mikrolinsen zurückreflektiert. Dennoch weisen die einzelnen Teilstrahlen hinter den Mikrolinsen eine gute Trennbarkeit ihrer Strahlengänge auf. In den Brennpunkten der Mikrolinsen werden die Teilstrahlen fokussiert. So werden an den Brennpunkten der Mikrolinsen Punktlichtquellen ausgebildet. Diese Punktlichtquellen werden mit dem Objektiv in die zu betrachtende Ebene der Probe abgebildet. Die Punktlichtquellen weisen einen seitlichen Abstand auf, der dem Durchmesser der verwendeten Mikrolinsen entspricht.

Die Mikrolinsen können eine einheitliche Brennweite aufweisen und in einer senkrecht zu dem Laserstrahl verlaufenden Ebene angeordnet sein. Dann sind auch die Brennpunkte der Mikrolinsen in einer Ebene angeordnet, und sie werden in einer Ebene der Probe abgebildet. Durch das Aufspalten des Laserstrahls mit den Mikrolinsen in mehrere Teilstrahlen wird das Abrastern der Probe in dieser Ebene gegenüber der Verwendung nur eines einzigen Fokuspunkts, in dem die Probe angeregt wird, beschleunigt.

Die Mikrolinsen können aber auch unterschiedliche Brennweiten aufweisen und/oder in parallelen Ebenen senkrecht zu dem Laserstrahl angeordnet sein. Damit weisen die Brennpunkte der Mikrolinsen unterschiedliche axiale Positionen auf und werden in unterschiedlichen Ebenen der Proben abgebildet. Beim Abrastern der Probe werden so gleichzeitig mehrere Ebenen der Probe erfaßt.

Die mehreren bei der Erfindung verwendeten Mikrolinsen werden hier gemeinsam als Mikrolinsen-Array bezeichnet. Ein solches Mikrolinsen-Array kann einstückig durch Blankpressen ausgebildet werden. Es weist eine typische Ausdehnung senkrecht zu dem Laserstrahl von einigen Millimetern, beispielsweise 5 mm, auf.

In dem Mikrolinsen-Array können die Mikrolinsen in einer Richtung nebeneinander angeordnet sein. Dies ist insbesondere dann sinnvoll, wenn der Laserstrahl durch Verwendung von zwei Stablinsen nur in einer Richtung aufgeweitet wurde. Bei Anordnung der Mikrolinsen in nur einer Richtung nebeneinander sind auch die Fokuspunkte zur Anregung der Probe in dieser Anordnung vorgesehen.

Um die Probe in einer größeren Anzahl von Fokuspunkten gleichzeitig anzuregen, sind können die Mikrolinsen in dem Mikrolinsen-Array in zwei Richtungen nebeneinander angeordnet sein. Ein solches zweidimensionales Mikrolinsen-Array weist typisch etwa 100 einzelne Mikrolinsen auf.

Die Mikrolinsen können zu einem Mikrolinsenrad angeordnet sein, wobei der aufgeweitete Laserstrahl durch jeweils einen Teil der Mikrolinsen in die Teilstrahlen aufgespalten wird und wobei durch Verdrehen des Mikrolinsenrads um seine parallel zu dem Laserstrahl verlaufende Achse die Probe zwei- oder dreidimensional abgescannt wird. Zum dreidimensionalen Abscannen müssen die Mikrolinsen des Mikrolinsenrads unterschiedliche Brennweiten Aufweisen oder in unterschiedlicher Entfernung zu der Probe angeordnet sein.

Bei einem Rastermikroskop gemäß der Erfindung ist es nicht sinnvoll, auch das von der Probe kommende Fluoreszenzlicht zurück durch das Mikrolinsen-Array zu führen, um eine streng konfokale Anordnung zu erreichen. Vielmehr ist das Fluoreszenzlicht vorher seitlich aus dem Strahlengang auszulenken und auf einen Photosensor abzubilden. Wenn dieser Photosensor ein CCD-Array ist, kann durch die Ansteuerung des CCD-Arrays eine Blende vor dem Photosensor simuliert werden, so daß effektiv ein konfokaler Aufbau des Rastermikroskops erreicht wird, ohne daß jedoch ein Justieraufwand wie für eine körperliche Blendenanordnung zu betreiben ist.

Das erfindungsgemäße Mikrolinsen-Array kann auch bei einem Rastermikroskop genutzt werden, bei dem die axiale Auflösung durch Interferenz von aus zwei Richtungen kommender Laserstrahlung erhöht wird. In diesem Fall wird der mit den Mikrolinsen in die Teilstrahlen aufgespaltene Laserstrahl mit einem Strahlteiler geteilt, und die geteilten Teilstrahlen werden im Bereich der Probe aus entgegengesetzten Richtungen zur Interferenz gebracht. In jedem der Fokuspunkte, in den ein Brennpunkt einer Mikrolinse aus zwei Richtungen abgebildet wird, bildet sich ein Interferenzmaximum aus, in dem die optische Anregung der Probe konzentriert erfolgt.

Die neue optische Vorrichtung ist nicht nur bei ihrer Ausbildung als Rastermikroskop von Vorteil. Vielmehr kann sie auch als Prüfvorrichtung zur Überprüfung von Linsen oder Linsenkombinationen eingesetzt werden, die dazu als Objektiv in die Vorrichtung eingebracht werden. Die Probe besteht dann beispielsweise aus einer Flüssigkeit, der ein fluoreszierender Stoff mit definierter, homogener Konzentration zugesetzt ist. Entsprechend darf sich bei einer Relativbewegung des Objektivs zu dem Mikrolinsen-Array keine Veränderung der mit dem Photosensor registrierten Fluoreszenzlicht-Intensitäten ergeben, wenn die Linse bzw. die Linsenkombination fehlerfrei ist.

Die Erfindung wird im folgenden anhand von Ausführungsbeispielen näher erläutert und beschrieben. Dabei wird jeweils auf ein Rastermikroskop Bezug genommen, obwohl die zuvor beschriebene Prüfvorrichtung für Linsen oder Linsenkombinationen einen identischen Aufbau aufweisen würde. In den beigefügten Zeichnungen zeigt
- Fig. 1: den Aufbau einer ersten Ausführungsform eines erfindungsgemäßen Rastermikroskops,
- Fig. 2: ein Detail einer zweiten, gegenüber Fig. 1 abgewandelten Ausführungsform des erfindungsgemäßen Rastermikroskops,
- Fig. 3-8: jeweils eine Prinzipskizze zu verschiedenen Ausführungsformen des bei einem erfindungsgemäßen Rastermikroskop zur Anwendung kommenden Mikrolinsen-Arrays,
- Fig. 9: eine dritte Ausführungsform des erfindungsgemäßen Rastermikroskops,
- Fig. 10: ein vergrößertes Detail des Rastermikroskops gemäß Fig. 9 und
- Fig. 11: eine Prinzipskizze zu einer weiteren Ausführungsform des bei einem erfindungsgemäßen Rastermikroskop zur Anwendung kommenden Mikrolinsen-Arrays.

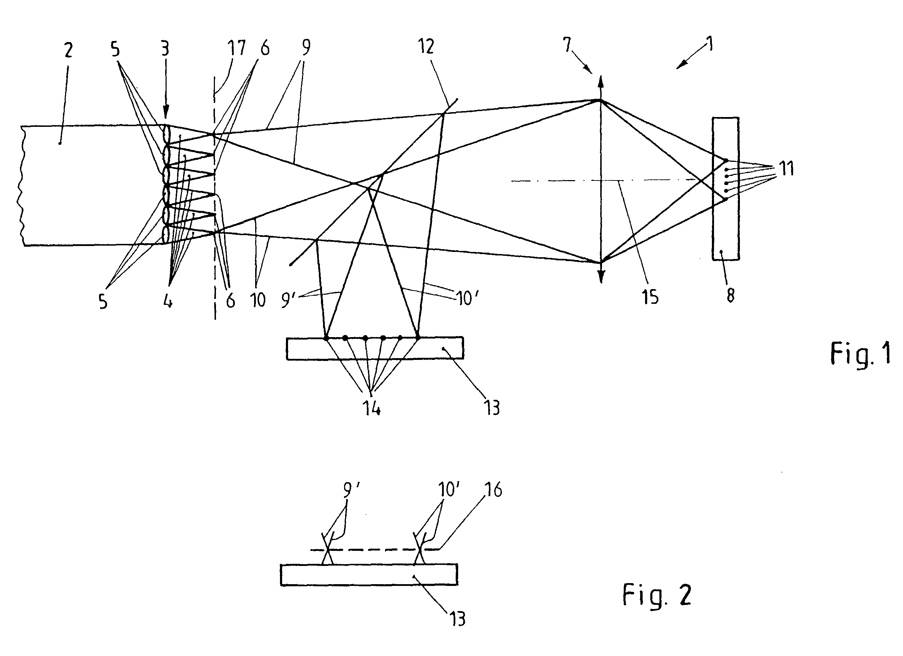

Bei dem in Fig. 1 dargestellten Rastermikroskop 1 wird ein aufgeweiteter Laserstrahl 2, der von einem hier nicht dargestellten Laser und einer ebenfalls nicht dargestellten Aufweiteoptik kommt, durch ein Mikrolinsen-Array 3 in einzelne Teilstrahlen 4 aufgespalten. Das Mikrolinsen-Array 3 besteht aus einer Mehrzahl nebeneinander angeordneter Mikrolinsen 5, die jeweils einen Teilstrahl 4 in ihrem Brennpunkt 6 fokussieren. Jeder der Brennpunkte 6 bildet eine Punktlichtquelle, die mit einem Objektiv 7 in eine Probe 8 abgebildet wird. Die Abbildung ist anhand der Strahlengänge 9 und 10 der beiden äußeren Teilstrahlen 4 zeichnerisch verdeutlicht. Jeder Teilstrahl 4 wird in einem Fokuspunkt 11 fokussiert, und in diesem Fokuspunkt 11 wird das Material der Probe zur Fluoreszenz optisch angeregt. Das Fluoreszenzlicht gelangt zurück durch das Objektiv 7 über einen halbdurchlässigen Umlenkspiegel 12 auf einen Photosensor 13. Auch für die Verdeutlichung der Abbildung der Fokuspunkte 11 auf den Photosensor 13 sind die Strahlengänge von den beiden äußeren Fokuspunkten 11 eingezeichnet und hier mit 9' und 10' bezeichnet. Die Bilder 14 der Fokuspunkte 11 auf dem Photosensor 13 weisen den gleichen seitlichen Abstand zueinander auf wie die Brennpunkte 6 der Mikrolinsen 5. Mit den Mikrolinsen 5 wird der gesamte Laserstrahl 2 für die Teilstrahlen 4 ausgenutzt, so daß bei einer vorgegebenen Lichtleistung des Laserstrahls 2 die maximale optische Anregung der Probe 8 in den Fokuspunkten 11 gegeben ist. Dies ist insbesondere von Vorteil, weil in den Fokuspunkten 11 eine mehr-Photonen-Anregung beobachtet wird, um die axiale Auflösung des Rastermikroskops 1 in Richtung der optischen Achse 15 des Objektivs 7 zu erhöhen. Die Konzentration der Fluoreszenzstrahlung auf den Bereich um die geometrischen Fokuspunkte 11 ist dabei so groß, daß irgendeine Blende vor dem Photosensor 13 nicht erforderlich ist, wie sie bei konfokalen Rastermikroskopen verwendet wird, um die axiale Auflösung zu verbessern. Wenn durch die Ansteuerung des Fotosensors 13, bei dem es sich vorzugsweise um ein CCD-Array handelt, dennoch eine Lochblende durch Software simuliert wird, kann das Rastermikroskop 1 gemäß Fig. 1 aber auch zur Beobachtung einer ein-Photonen-Anregung der Probe in den Fokuspunkten 11 verwendet werden.

Fig. 2 skizziert demgegenüber die Anordnung einer körperlich vorhandenen Lochblende 16 vor dem Photosensor 13 in einer abgewandelten Ausführungsform des Rastermikroskops 1 gemäß Fig. 1.

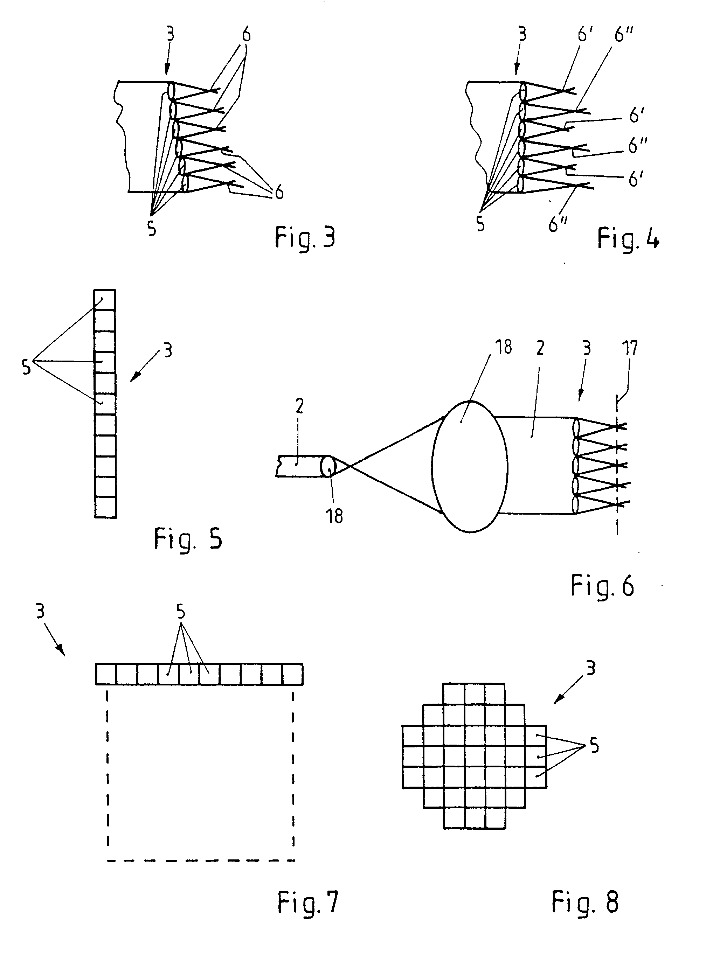

Bei der Ausführungsform des Rastermikroskops gemäß Fig. 1 sind die Mikrolinsen 5 des Mikrolinsen-Arrays 3 in einer Ebene angeordnet, und die Mikrolinsen 5 weisen alle dieselbe Brennweite auf, so daß auch die Brennpunkte 6 in einer Ebene 17 angeordnet sind. Anders verhält es sich bei den Ausführungsformen gemäß den Fig. 3 und 4. Gemäß Fig. 3 sind die Mikrolinsen 5 des Mikrolinsen-Arrays 3 in axialer Richtung versetzt angeordnet. Da sie gleichzeitig dieselbe Brennweite aufweisen, sind die Brennpunkte 6 in gleicher Weise wie die Mikrolinsen 5 axial versetzt. Die Brennpunkte 6 werden dementsprechend in verschiedenen Ebenen der Probe 8 abgebildet. So wird die Probe 8 bei Verwendung des Mikrolinsen-Arrays 3 gemäß Fig. 3 in mehreren hintereinander liegenden Ebenen optisch angeregt.

Eine solche Anregung in mehreren Ebenen ist auch durch unterschiedliche Brennweiten der Mikrolinsen 5 des Mikrolinsen-Arrays 3 realisierbar, wie dies in Fig. 4 skizziert ist. Hier weist eine Hälfte der Mikrolinsen 5 eine kürzere Brennweite als die andere Hälfte der Mikrolinsen 5 auf. Konkret liegen die Brennpunkte 6' der einen Hälfte der Mikrolinsen 5 in einer anderen Ebene als die Brennpunkte 6" der anderen Hälfte der Mikrolinsen 5. Die Probe 8 wird so in zwei parallel zueinander liegenden Ebenen optisch angeregt.

Fig. 5 zeigt eine Draufsicht auf ein Mikrolinsen-Array 3, bei dem die einzelnen Mikrolinsen 5 senkrecht zu dem in der Blickrichtung einfallenden Laserstrahl in nur einer Richtung nebeneinander angeordnet sind. Ein solches Mikrolinsen-Array 3 ist auf die Aufweitung eines Laserstrahls 2 in nur einer Richtung mittels Stablinsen 18 abgestimmt, wie sie in Fig. 6 skizziert ist.

In den Fig. 7 und 8 sind zwei Ausführungsbeispiele des Mikrolinsen-Arrays 3 dargestellt, bei denen die einzelnen Mikrolinsen in zwei Richtungen nebeneinander angeordnet sind. Diese Mikrolinsen-Arrays 3 sind auf eine zweidimensionale Aufweitung des Laserstrahls 2 abgestimmt, wobei das Mikrolinsen-Array 3 gemäß Fig. 8 dem normalerweise runden Querschnitt eines Laserstrahls stärker Rechnung trägt als das rechteckige Mikrolinsen-Array 3 gemäß Fig. 7.

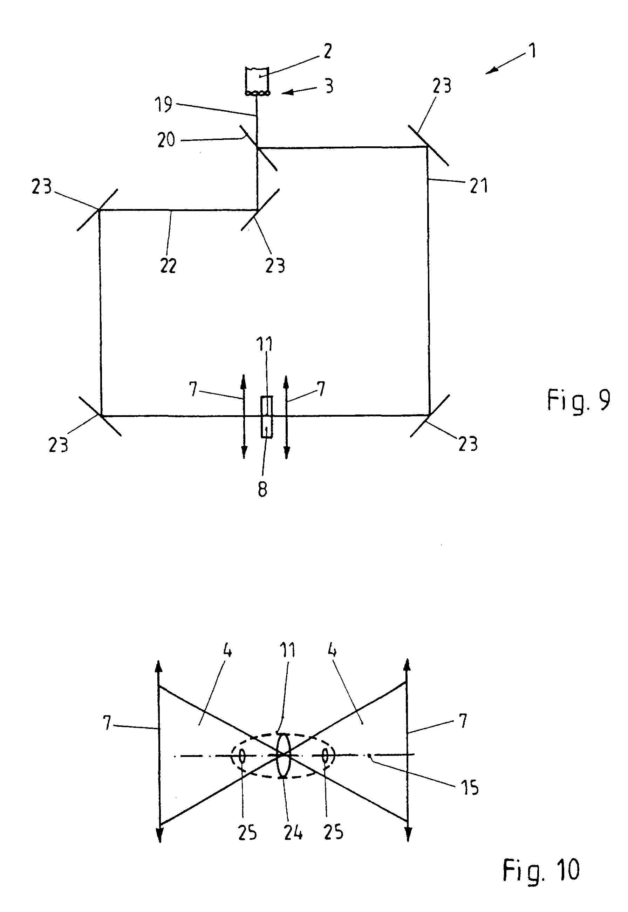

In dem in Fig. 9 dargestellten Rastermikroskop 1 wird der aufgeweitete Laserstrahl 2 zunächst wieder durch das Mikrolinsen-Array 3 in mehrere Teilstrahlen aufgespalten. Diese Teilstrahlen sind hier jedoch nicht im einzelnen dargestellt. Vielmehr ist nur ein Strahlengang 19 wiedergegeben, der im Anschluß an einen Strahlteiler 20 in zwei Wege 21 und 22 aufgeteilt ist. Die geteilten Teilstrahlen werden durch Umlenkspiegel 23 über die Wege 21 und 22 in entgegengesetzten Richtungen zwei Objektiven 7 zugeführt, die die geteilten Teilstrahlen im Bereich der Probe 8 überlagern. Wenn die Teilstrahlen aus monochromatischem, kohärentem Licht bestehen, ergibt sich das in Fig. 10 für zwei Teilstrahlen 4 skizzierte Interferenzmuster mit einem Hauptmaximum und zwei Nebenmaxima im Bereich des dargestellten Fokuspunkts 11. Die Hauptmaximum 24 und die Nebenmaxima 25 liegen in Richtung der optischen Achse 15 der Objektive 7 so weit auseinander, daß Fluoreszenzlicht durch eine konfokale Anordnung eines Photosensors dahingehend diskriminiert werden kann, daß nur Fluoreszenzlicht aus dem Bereich des Hauptmaximums 24 registriert wird. Bei der Beobachtung einer mehr-Photonen-Anregung ergibt sich diese Diskriminierung auch automatisch durch die stark unterschiedlichen Anregungswahrscheinlichkeiten in dem Hauptmaximum 24 und den Nebenmaxima 25.

Die Erfindung, den Laserstrahl 2 mit einem Mikrolinsen-Array 3 aus einer Vielzahl von einzelnen Mikrolinsen 5 aufzuspalten, ist demnach bei verschiedensten Rastermikroskopen anwendbar. In jedem Fall wird die gesamte Lichtintensität des einfallenden Laserstrahls 2 voll ausgenutzt. Dies ist insbesondere bei der Beobachtung von mehr-Photonen-Anregungen von Vorteil, weil die Wahrscheinlichkeit dieser Anregungen grundsätzlich viel geringer ist als von ein-Photonen-Anregungen.

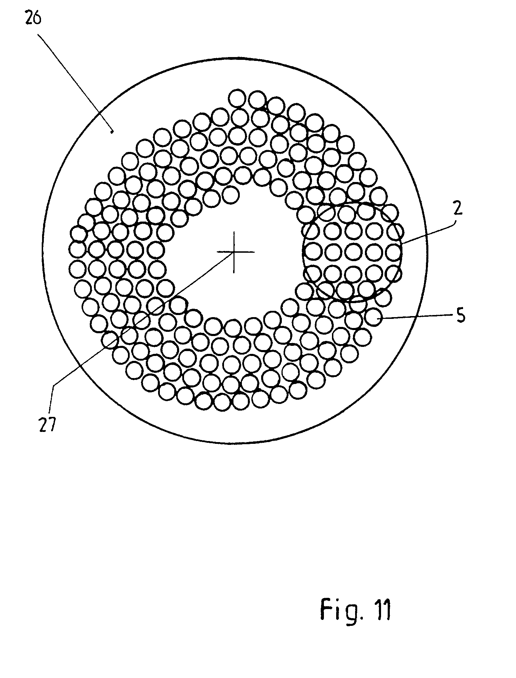

Die Ausführungsform des Mikrolinsen-Arrays 3 gemäß Figur 11 ist zum zwei- oder dreidimensionalen Abscannen einer Probe mit den Fokuspunkten der einzelnen Teilstrahlen des Lasersprahls 2 vorgesehen. Die Mikrolinsen 5 sind zu einem Mikrolinsenrad 26 angeordnet sind, wobei der aufgeweitete Laserstrahl 2 jeweils durch einen Teil der zweidimensional nebeneinander angeordneten Mikrolinsen 5 im wesentlichen vollständig in die Teilstrahlen aufgespalten wird, weil nur diese Mikrolinsen 5 beleuchtet werden. Durch Verdrehen des Mikrolinsenrads 26 um seine parallel zu dem Laserstrahl verlaufende Achse 27 werden die Mikrolinsen 5 relativ zu der Probe bewegt und es werden auch andere Linsen zur Aufspaltung des Laserstrahls 2 herangezogen. Im Ergebnis wird die Probe zwei- oder dreidimensional abgescannt, je nachdem, ob die Mikrolinsen 5 eine Brennweite aufweisen und ihre Brennpunkte 6 gemäß Figur 6 in einer Ebene liegen wird oder gemäß Figur 3 oder 4 eine Tiefenverteilung aufweisen. Bei ausreichend großer Frequenz des Abscannens der Probe mit dem Mikrolinsenrad 26 kann das von der Probe kommende Fluoreszenzlicht am Ort des Photosensors oder über ein zusätzliches Okular direkt mit dem Auge als Bild der Probe betrachtet werden. Dabei ist die Verwendung eines IR-Filters zum Ausblenden von gestreutem Anregungslicht sinnvoll. Eine zur Betrachtung mit dem Auge bei weitem ausreichende Abscannfrequenz wird beispielsweise erreicht, wenn die Anordnung der Mikrolinsen 5 zu dem Mikrolinsenrad 26 die gesamte Probe je Umdrehung des Mikrolinsenrads fünfmal abdeckt und das Mikrolinsenrad 26 mit einer Frequenz von 75 hz um seine Achse 27 rotiert wird. Die direkte Betrachtung einer Probe bei deren mehr-Photonen-Anregung in Echtzeit war vor der Erfindung wegen der beim Stand der Technik nur sehr geringen Fluoreszenzlichtausbeuten pro Zeit nicht möglich.

### BEZUGSZEICHENLISTE

- 1 -: Rastermikroskop
- 2 -: Laserstrahl
- 3 -: Mikrolinsen-Array
- 4 -: Teilstrahl
- 5 -: Mikrolinse
- 6 -: Brennpunkt
- 7 -: Objektiv
- 8 -: Probe
- 9 -: Strahlengang
- 10 -: Strahlengang

- 11 -: Fokuspunkt
- 12 -: Umlenkspiegel
- 13 -: Photosensor
- 14 -: Bild
- 15 -: optische Achse
- 16 -: Lochblende
- 17 -: Ebene
- 18 -: Stablinse
- 19 -: Strahlengang
- 20 -: Strahlteiler

- 21 -: Weg
- 22 -: Weg
- 23 -: Umlenkspiegel
- 24 -: Hauptmaximum
- 25 -: Nebenmaximum
- 26 -: Mikrolinsenrad
- 27 -: Achse

## Patentansprüche

1. Optische Vorrichtung, insbesondere Rastermikroskop, wobei ein aufgeweiteter Laserstrahl durch mehrere nebeneinander angeordnete Mikrolinsen in mehrere Teilstrahlen aufgespalten wird, wobei die Teilstrahlen mit einem gemeinsamen Objektiv jeweils in einem Fokuspunkt zur optischen Anregung einer Probe fokussiert werden und wobei mit einem von der Probe aus hinter dem Objektiv angeordneten Photosensor aus den einzelnen Fokuspunkten von der Probe stammendes Fluoreszenzlicht registriert wird, **dadurch gekennzeichnet, daß** jedes Photon des von der Probe (8) kommenden und mit dem Photosensor (13) registrierten Fluoreszenzlichts durch mindestens zwei Photonen aus dem Laserstrahl angeregt wird.

2. Vorrichtung nach Anspruch 1, **dadurch gekennzeichnet, daß** die Wellenlänge des Laserstrahls (2) etwa doppelt so lang ist wie die Wellenlänge des von der Probe (8) kommenden und mit dem Photosensor (13) registrierten Fluoreszenzlichts.

3. Vorrichtung nach Anspruch 1 oder 2, **dadurch gekennzeichnet, daß** die Mikrolinsen (4) eine einheitliche Brennweite aufweisen und in einer senkrecht zu dem Laserstrahl (2) verlaufenden Ebene angeordnet sind.

4. Vorrichtung nach Anspruch 1 oder 2, **dadurch gekennzeichnet, daß** die Mikrolinsen (4) unterschiedliche Brennweiten aufweisen und/oder in parallelen Ebenen senkrecht zu dem Laserstrahl (2) angeordnet sind.

5. Vorrichtung nach einem der Ansprüche 1 bis 4, **dadurch gekennzeichnet, daß** die Mikrolinsen (4) in einer Richtung nebeneinander angeordnet sind.

6. Vorrichtung nach einem der Ansprüche 1 bis 4, **dadurch gekennzeichnet, daß** die Mikrolinsen (5) in zwei Richtungen nebeneinander angeordnet sind.

7. Vorrichtung nach Anspruch 6, **dadurch gekennzeichnet, daß** die Mikrolinsen (5) zu einem Mikrolinsenrad (26) angeordnet sind, wobei der aufgeweitete Laserstrahl (2) durch jeweils einen Teil der Mikrolinsen (5) in die Teilstrahlen (4) aufgespalten wird und wobei durch Verdrehen des Mikrolinsenrads um seine parallel zu dem Laserstrahl verlaufende Achse (27) die Probe (8) zwei- oder dreidimensional abgescannt wird.

8. Vorrichtung nach einem der Ansprüche 1 bis 7, **dadurch gekennzeichnet, daß** der Photosensor (13) ein CCD-Array ist.

9. Vorrichtung nach einem der Ansprüche 1 bis 8, **dadurch gekennzeichnet, daß** der mit den Mikrolinsen (5) in Teilstrahlen (4) aufgespaltene Laserstrahl (2) mit einem Strahlteiler (20) geteilt und die beiden geteilten Teilstrahlen im Bereich der Probe (8) aus entgegengesetzten Richtungen zur Interferenz gebracht werden.

10. Verwendung einer Vorrichtung nach einem der Ansprüche 1 bis 8 zum Bestimmen der Fehler einer Linse oder einer Linsenanordnung, wobei die Linse als Objektiv (7) eingesetzt wird.

## Claims

1. An optical apparatus, especially a scanning microscope, wherein an expanded laser beam is divided into several partial beams by micro lenses arranged next to one another, wherein each partial beam is focused onto a focal point by a common objective lens to optically excite a sample, and wherein fluorescent light emanating from the individual focal points of the sample is registered by a photo sensor arranged behind the lens as seen from the sample, **characterized in that** each photon of the fluorescent light coming from the sample (8) and being registered by the photo sensor (13) is excited by at least two photons of the laser beam (2).

2. The apparatus of claim 1, **characterized in that** the wavelength of the laser beam (2) is approximately twice as long as the wavelength of the fluorescent light coming from the sample (8) and being registered by the photo sensor (13).

3. The apparatus of claim 1 or 2, **characterized in that** the micro lenses (5) have a common focal length and are arranged in a plane oriented perpendicularly to the laser beam (2).

4. The apparatus of claim 1 or 2, **characterized in that** the micro lenses (5) have different focal lengths and/or are arranged in parallel planes oriented perpendicularly to the laser beam (2).

5. The apparatus of one of the claims 1 to 4, **characterized in that** the micro lenses (5) are arranged side by side in one direction.

6. The apparatus of the claims 1 to 4, **characterized in that** the micro lenses (5) are arranged side by side in two directions.

7. The apparatus of claim 6, **characterized in that** the micro lenses (5) are arranged to form a micro lens wheel (26), wherein the expanded laser beam (2) is divided into the partial beams (4) by some of the micro lenses (5), and wherein the sample (8) is scanned in two or three dimensions by rotating the micro lens wheel (26) about its axis (27) extending in parallel to the laser beam (2).

8. The apparatus of one of the claims 1 to 7, **characterized in that** the photo sensor (13) is a CCD-array.

9. The apparatus of one of the claims 1 to 8, **characterized in that** the laser beam (2) divided into partial beams (4) by the micro lenses (5) is divided by a beam dividing device (20), and that the two divided partial beams coming from opposite directions are brought to interference in the region of the sample (8).

10. A method for determining the defect of a lens or of a lens arrangement, wherein the lens is used as an objective lens (7), the method using a apparatus of one of the claims 1 to 8.

## Revendications

1. Dispositif optique, en particulier microscope à balayage, dans lequel un faisceau laser élargi est décomposé en plusieurs faisceaux partiels par plusieurs microlentilles disposées côte à côte, dans lequel les faisceaux partiels sont focalisés par un objectif commun respectivement à un point foyer pour l'excitation optique d'un échantillon et dans lequel la lumière fluorescente provenant des points foyers individuels de l'échantillon est enregistrée par un photodétecteur disposé en dehors de l'échantillon en arrière de l'objectif,
**caractérisé en ce que** chaque photon de la lumière fluorescente venant de l'échantillon (8) et enregistrée par le photodétecteur (13) est excité par au moins deux photons provenant du faisceau laser.

2. Dispositif selon la revendication 1,
**caractérisé en ce que** la longueur d'onde du faisceau laser (2) a une longueur sensiblement double de la longueur d'onde de la lumière fluorescente venant de l'échantillon (8) et enregistrée par le photodétecteur (13).

3. Dispositif selon la revendication 1 ou 2,
**caractérisé en ce que** les microlentilles (5) présentent une distance focale uniforme et sont disposées dans un plan s'étendant orthogonalement au faisceau laser (2).

4. Dispositif selon la revendication 1 ou 2,
**caractérisé en ce que** les microlentilles (5) présentent des distances focales différentes et/ou sont disposées orthogonalement au faisceau laser (2) dans des plans parallèles.

5. Dispositif selon l'une des revendications 1 à 4,
**caractérisé en ce que** les microlentilles (5) sont disposées côte à côte dans une direction.

6. Dispositif selon l'une des revendications 1 à 4,
**caractérisé en ce que** les microlentilles (5) sont disposées côte à côte dans deux directions.

7. Dispositif selon la revendication 6,
**caractérisé en ce que** les microlentilles (5) sont disposées selon une roue (26) de microlentilles, le faisceau laser (2) élargi étant décomposé en les faisceaux partiels (4) respectivement à travers une partie des microlentilles (5) et l'échantillon (8) étant balayé bi- ou tridimensionnellement par rotation de la roue de microlentilles autour de son axe (27) s'étendant parallèlement au faisceau laser.

8. Dispositif selon l'une des revendications 1 à 7,
**caractérisé en ce que** le photodétecteur (13) est une matrice de systèmes à transfert de charges CCD.

9. Dispositif selon l'une des revendications 1 à 8,
**caractérisé en ce que** le faisceau laser (2) décomposé en faisceaux partiels (4) par les microlentilles (5) est divisé par une lame séparatrice (20) et les deux faisceaux partiels divisés sont mis en interférence dans la zone de l'échantillon (8) depuis des directions opposées.

10. Utilisation d'un dispositif selon l'une des revendications 1 à 8 pour déterminer les défauts d'une lentille ou d'un ensemble de lentilles, la lentille étant implantée en tant qu'objectif (7).
